# EUROPÄISCHE PATENTSCHRIFT

(11) **EP 0 651 687 B1**
(45) Veröffentlichungstag und Bekanntmachung des Hinweises auf die Patenterteilung: **27.11.1996**
(21) Anmeldenummer: 93912574.6
(22) Anmeldetag: 05.06.1993
(51) Int. Cl.: B24C 9/00, B24C 3/32, B24C 3/08, H05F 3/02

(54) **VORRICHTUNG ZUR ENTFERNUNG VON GRATEN AN KUNSTSTOFFTEILEN MITTELS STRAHLUNG MIT KUNSTSTOFFGRANULAT**
APPARATUS FOR REMOVING FLASHES FROM PIECES OF PLASTIC BY BLASTING WITH PLASTIC GRANULES
DISPOSITIF D'EBAVURAGE DE PIECES EN MATIERE PLASTIQUE PAR GRENAILLAGE AU MOYEN DE GRANULES EN MATIERE PLASTIQUE

(30) Priorität: 21.07.1992 DE 4223885
(43) Veröffentlichungstag der Anmeldung: 10.05.1995
(73) Patentinhaber: Maschinen- und Werkzeugfabrik Kabel Vogel & Schemmann AG., D-5800 Hagen (DE)
(72) Erfinder: PROKOPP, Hubert, D-5805 Breckerfeld (DE)
(74) Vertreter: Köchling, Conrad, Dipl.-Ing.
(86) Internationale Anmeldenummer: DE9300498
(87) Internationale Veröffentlichungsnummer: WO9402288

(56) Entgegenhaltungen:
- CH-A- 374 901
- CH-A- 650 703
- DE-A- 4 018 550

## Beschreibung

Die Erfindung betrifft eine Vorrichtung zur Entfernung von Graten an Kunststoffteilen mittels Strahlung mit Kunststoffgranulat, bestehend aus einem Fördermittel zur Förderung der Kunststoffteile, einer Strahlvorrichtung mit Strahlmitteln, die das Fördermittel umgebend angeordnet sind und das Kunststoffgranulat auf die Kunststoffteile schleudern, einer Auffangvorrichtung zum Auffangen des Kunststoffgranulats, einer Fördervorrichtung für das Kunststoffgranulat, mittels derer es über eine Übergabeeinrichtung an eine Trennvorrichtung überführbar ist, in der Kunststoffgranulat und Restrückstände der Kunststoffteile separierbar sind, einer nachgeordneten Windsichtvorrichtung mittels derer anhaftende Stäube vom Kunststoffgranulat entfernbar und abtrennbar sind, sowie einer gegebenenfalls durch einen Zwischenspeicher gepufferten Fördereinrichtung, mittels derer das gereinigte Kunststoffgranulat der Strahlvorrichtung wieder zuführbar ist, wobei Mittel vorgesehen sind, mittels derer die verfahrensbedingte statische Aufladung des Kunststoffgranulates abbaubar ist.

Derartige Vorrichtung sind im Stand der Technik bekannt (siehe z.B. CH-A-374 901). Dabei wird Kunststoffgranulat über einen Vorratsbunker durch automatisch gesteuerte Strahlmittelschieber zu Turbinen gefördert, die mit beispielsweise Geschwindigkeiten von bis zu 70 m pro Sekunde das Kunststoffgranulat auf die zu strahlenden Kunststoff teile schleudert. Diese Strahlvorrichtung ist in einem Maschinengehäuse angeordnet, welches von dem Fördermittel durchlaufen wird. Das Fördermittel kann beispielsweise eine Fördervorrichtung sein, an der die zu strahlenden Kunststoffteile eingangsseitig aufgehängt und ausgangsseitig von diesem wieder abgenommen werden können. Mittels der Strahlung mit Kunststoffgranulat werden von den Kunststoffteilen bei der Formgebung entstehende Grate oder dergleichen entfernt.

Im Bereich dieser Vorrichtung unterhalb der Strahlvorrichtung ist ein Auffangtrichter als Auffangsvorrichtung zum Auffangen des Kunststoffgranulates vorgesehen. Unterhalb des Auffangtrichters ist eine Förderschnecke angeordnet, mittels derer das aufgefangene Kunststoffgranulat einer Fördervorrichtung zugeführt wird. Diese Fördervorrichtung kann beispielsweise ein Becherwerk sein, mittels dessen das Kunststoffgranulat in einem Bereich oberhalb der Vorrichtung transportiert wird. Von dem Becherwerk wird das Kunststoffgranulat über eine Übergabeeinrichtung in Form einer Rutsche an eine Trennvorrichtung in Form einer Vibrationsrinne überführt. Die Vibrationsrinne hat die Aufgabe, das Kunststoffgranulat und Restrückstände (Grobteile) der Kunststoffteile zu separarieren.

Das so von Grobteilen gereinigte Strahlmittel (Kunststoffgranulat) wird über Kaskaden einer Windsichtvorrichtung zugeführt, in der das Strahlmittel von lose anhaftenden Stäuben befreit wird. Von hier aus wird das Strahlmittel in einen Vorratsbehälter abgegeben, der wiederum mit den Turbinen in Verbindung steht.

Bei dem beschriebenen Materialfluß des Kunststoffgranulates entsteht an vielen Stellen der Vorrichtung eine statische Aufladung des Kunststoffgranulates ebenso wie eine statische Aufladung der Kunststoffteile.

Im Stand der Technik ist es dazu üblich, daß an verschiedenen Bereichen der Vorrichtung Sprühvorrichtungen zum Aufbringen von liquiden Antistatikmitteln vorgesehen sind, mittels derer kontinuierlich auf die zu strahlenden Teile sowie auf das Kunststoffgranulat Antistatikmittel aufgesprüht wird. Hierdurch wird die statische Aufladung zwar mindestens teilweise neutralisiert, jedoch mit dem wesentlichen Nachteil, daß das Kunststoffgranulat und ebenso die Kunststoffteile nachträglich von dem anhaftenden Antistatikmittel befreit werden müssen. Dies ist hinsichtlich des Kunststoffgranulates relativ aufwendig und auch hinsichtlich der Kunststoffteile arbeitsintensiv und deswegen notwendig, weil ansonsten eine ordnungsgemäße Beschichtung, Lackierung, Beschriftung oder sonstige Bearbeitung der Kunststoffteile nicht möglich ist. Desweiteren ist es gemäß Stand der Technik erforderlich, sehr häufig die entsprechenden Sprühdüsen zu reinigen, was zu Betriebsunterbrechungen führt, ebenso wie ein nicht zu vermeidendes Anbacken von Kunststoffgranulat in bestimmten Bereichen der Vorrichtung.

Ausgehend von diesem Stand der Technik liegt der Erfindung die Aufgabe zugrunde, eine Vorrichtung gattungsgemäßer Art zu schaffen, mit der in wenig aufwendiger Weise eine statische Entladung des Kunststoffgranulates in der Vorrichtung erfolgen kann, wobei zudem eine Befreiung der Kunststoffteile von Granulat und Staub Ziel der Erfindung ist, ohne daß das Granulat und/oder die Kunststoffteile durch zusätzliche Mittel belastet ist, die von diesen Bestandteilen später im Verfahrensablauf wieder abgetrennt werden müßten.

Zur Lösung dieser Aufgabe schlägt die Erfindung vor, daß als Mittel zur Neutralisation der statischen Aufladung des Kunststoffgranulates Ionensprühstäbe und/oder Ionensprühdüsen über den Kreislaufweg des Kunststoffgranulats verteilt angeordnet sind.

Derartige Ionensprühstäbe oder Ionensprühdüsen sind im Stand der Technik bekannt. Jedoch ist der Einsatz derartiger Ionensprühstäbe oder Ionensprühdüsen bei einer gattungsgemäßen Vorrichtung bisher weder bekannt, noch gibt es im Stand der Technik Anregungen dazu, den erfindungsgemäßen Vorschlag aufzugreifen.

Eine bevorzugte Weiterbildung wird darin gesehen, daß im Bereich der Strahlmittel der Strahlvorrichtung Ionensprühstäbe angeordnet sind

Weiterhin ist bevorzugt vorgesehen, daß insbesondere in Kombination mit den vorbeschriebenen Maßnahmen vorgesehen wird, daß im Bereich der Auffangvorrichtung für das Kunststoffgranulat Ionensprühdüsen angeordnet sind, deren Ionensprühstrahl insbesondere auf die durchlaufenden Kunststoffteile gerichtet ist.

Desweiteren ist vorgesehen, daß im Anschluß an die Fördervorrichtung für das Kunststoffgranulat, insbesondere im Bereich der Übergabeeinrichtung, Ionensprühstäbe angeordnet sind.

Darüber hinaus ist vorteilhaft, daß im Sichtungsschleier der Windsichtvorrichtung Ionensprühstäbe angeordnet sind.

Besonders vorteilhaft ist die Anwendung der Kombination aller Merkmale gemäß vorstehender Auflistung.

Durch diese Anordnung und Ausbildung wird erreicht, daß das Kunststoffgranulat über seinen Weg in der Vorrichtung an kritischen Bereichen statisch entladen wird, ohne daß es mit nachträglich zu entfernenden Mitteln beaufschlagt wird. Der Fluß des Kunststoffgranulates wird dadurch erheblich gefördert und erleichtert, wobei ein Verbacken des Kunststoffgranulates an Vorrichtungsbestandteilen und damit eine zu deren Beseitigung erforderliche Betriebsunterbrechung unterbunden ist. Durch die im Bereich der Strahlmitteldüsen angeordneten Ionensprühstäbe wird das Kunststoffgranulat in diesem Bereich elektrostatisch entladen (durch positiv und negativ geladene Ionen), so daß in diesem Bereich elektrostatisch bedingte Ablagerungen unterbunden sind. Infolge des Weitertransportes des Kunststoffgranulates und die dadurch entstehenden Reibungen wird es erneut elektrostatisch aufgeladen. Deswegen ist auch an der Strahlmittelübergabeeinrichtung die Anordnung von Ionensprühstäben vorgesehen. Auch beim Separieren von Grobteilen und Kunststoffgranulat, insbesondere auf einer Vibrationsrinne entsteht ebenfalls Reibung, ebenso wie beim Durchfließen durch die Kaskadenwindsichtung, so daß auch dort die Anordnung von Ionensprühstäben zu einer elektrostatischen Entladung (Neutralisierung) führt. Durch die Anordnung von Ionensprühdüsen im Bereich der Auffangvorrichtung für das Kunststoffgranulat und der Abgabestelle der Kunststoffteile wird erreicht, daß einerseits das Kunststoffgranulat elektrostatisch entladen wird und andererseits auch die Umgebungsluft durch das Besprühen mit dem Ionensprühstrahl (positiv und negativ geladenen Ionen) elektrostatisch entladen wird, wobei zusätzlich das an den Kunststoffteilen anhaftende Kunststoffgranulat sowie Stäube auf den Kunststoffteilen mittels der durch die Ionensprühdüsen abgegebenen Druckluft abgeblasen und gleichzeitig ionisiert werden, so daß im Ergebnis die Kunststoffteile äußerst sauber und frei von Stäuben sowie von Kunststoffgranulat aus der Vorrichtung nach dem Strahlvorgang abgegeben werden. Die durch die Ionensprühdüsen abgeblasenen Stäube, die elektrostatisch entladen sind, können durch eine Filteranlage abgesaugt werden, während das Restgranulat, welches bis zu diesem Teil der Vorrichtung noch auf den Kunststoffteilen haftete, durch das Abblasen und gleichzeitige Ionisieren in den Kreislauf der Vorrichtung zurückgeführt werden kann.

Im Ergebnis wird durch die Erfindung eine äußerst wirksame statische Entladung von Kunststoffgranulat und gestrahlten Kunststoffteilen erreicht, wobei weder dem Kunststoffgranulat noch den Kunststoffteilen artfremde Bestandteile zum Zwecke der statischen Entladung zugeführt werden müssen.

Ein Ausführungsbeispiel der Erfindung ist nachstehend anhand der Zeichnungen näher erläutert.

Es zeigt:
- Figur 1: eine erfindungsgemäße Vorrichtung in Ansicht;
- Figur 2: desgleichen in Seitenansicht.

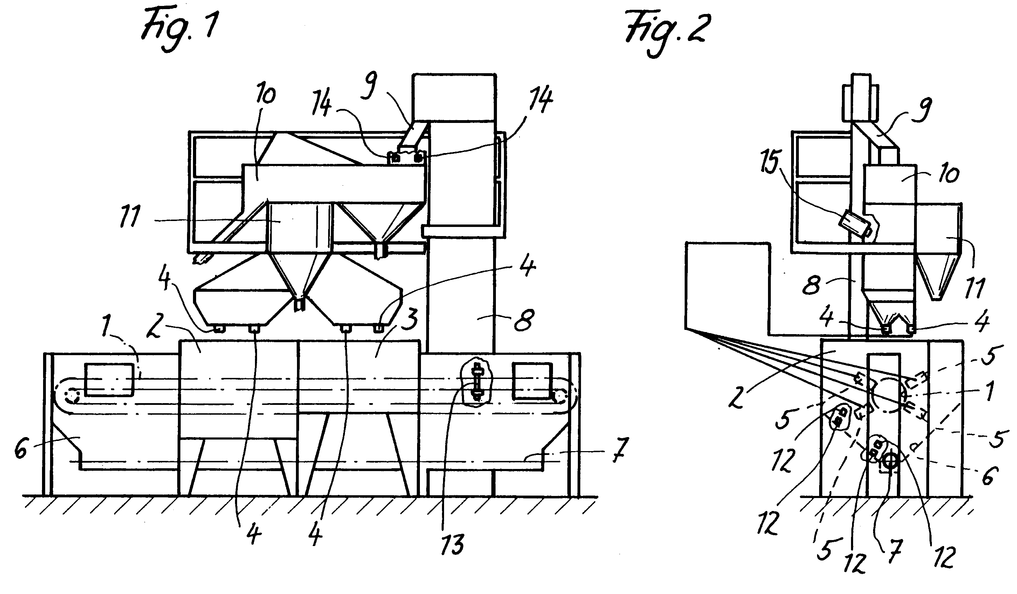

Die Vorrichtung zur Entfernung von Graten an Kunststoffteilen, vorzugsweise aus Duroplasten, z.B. Polyester, mittels Strahlung und Kunststoffgranulat, z.B. Polyamidgranulat, besteht aus einem Fördermittel 1, beispielsweise einem Stetigförderer, mittels dessen die Kunststoffteile durch die Vorrichtung zum Strahlen hindurchgeführt werden kann. Diese Fördervorrichtung 1 ist im Mittelbereich von einer Strahlvorrichtung 2, 3 umgeben und durch Gehäuseteile abgedeckt, wobei die Strahlvorrichtung mittels Turbinen 5 das Kunststoffgranulat mit Geschwindigkeiten von bis zu 70 - 85 m pro Sekunde auf die zu strahlenden Teile schleudert. Die entsprechenden Strahlmittelschieber für das Kunststoffgranulat sind mit 4 bezeichnet. Im Unterteil der Vorrichtung ist ein Auffangtrichter 6 angeordnet, aus dem mittels einer Förderschnecke 7 das Kunststoffgranulat abgefördert wird. Das Kunststoffgranulat wird über eine Übergabeeinrichtung in Form eines Becherwerkes 8 an eine Rutsche 9 abgegeben, welche zu einer Trennvorrichtung führt, die aus einer Vibrationsrinne 10 und einer Windsichterkaskade 11 besteht. In der Vibrationsrinne wird das Kunststoffgranulat von Grobbestandteilen (Restrückständen der Kunststoffteile) befreit, während im Windsichter 11 das Strahlmittel von lose anhaftenden Stäuben befreit wird. Das Strahlmittel gelangt dann in einen Vorratsbehälter, von dem es über automatisch gesteuerte Strahlmittelschieber 4 zu den Turbinen 5 gefördert wird.

Zur Beseitigung der betriebsbedingten elektrostatischen Aufladung des Kunststoffgranulates sind in unterschiedlichen Bereichen der Vorrichtung Ionensprühstäbe und/oder Ionensprühdüsen angeordnet. Insbesondere ist im Bereich der Aufgabe der Strahlmittel (bei 5) eine Anordnung von Ionensprühstäben 12 vorgesehen, mittels derer das Kunststoffgranulat elektrostatisch entladen wird. Um die Sauberkeit der Kunststoffteile, die durch die Fördervorrichtung bewegt werden, zu gewährleisten, ist am Auslauf der Fördervorrichtung 1 die Anordnung von Ionensprühdüsen 13 vorgesehen. Mittels dieser Ionensprühdüsen wird das an den Kunststoffteilen anhaftende Kunststoffgranulat und auch anhaftende Stäube mittels Druckluft abgeblasen und gleichzeitig ionisiert. Die elektrostatisch entladenen Stäube können über eine Filteranlage abgesaugt werden, während das entionisierte Restgranulat, welches bis zu diesem Teil der Vorrichtung an den Kunststoffteilen noch anhaftet, durch das Abblasen und gleichzeitige Ionisieren in den Kreislauf zurückgeführt wird, also über die Förderschnecke 7 auch dem Becherwerk 8 zugeführt werden kann. Desweiteren wird im Bereich der Strahlmittelübergabestation bei 14 die Anordnung von weiteren Ionensprühstäben vorgesehen, um das auf dem Transportweg wieder elektrostatisch aufgeladene Kunststoffgranulat elektrostatisch zu entladen. Schließlich ist auch in dem Windsichter 11, insbesondere in dessen Sichtungsschleier, die Anordnung von Ionensprühstäben 15 vorgesehen. Hiermit wird die elektrostatische Aufladung beseitigt, die beim Separieren von Grobteilen und Kunststoffgranulat auf der Vibrationsrinne und ebenfalls durch Reibung beim Durchfließen der Kaskadenwindsichtung entstanden ist.

An den Spitzen der Ionensprühstäbe wird ein elektrisches Feld erzeugt, welches die Luftmoleküle in positive und negative Ionen aufspaltet. Durch die Anziehungskraft der gegenpoligen Ladungen wird das innerhalb des Wirkungsbereiches der Sprühstäbe befindliche Material in seiner elektrischen Anflachung neutralisiert.

Durch die beschriebene Vorrichtung und Ausbildung wird ohne Fremdmittel eine hervorragende statische Entladung des Kunststoffgranulates erreicht und zudem sichergestellt, daß die gestrahlten Kunststoffteile weitestgehend staubfrei aus der Vorrichtung entnommen werden können, so daß nachfolgende eine problemlose Beschichtung, Beschriftung oder Lackierung der Kunststoffteile ermöglicht ist.

## Patentansprüche

1. Vorrichtung zur Entfernung von Graten an Kunststoffteilen mittels Strahlung mit Kunststoffgranulat, bestehend aus einem Fördermittel zur Förderung der Kunststoffteile, einer Strahlvorrichtung mit Strahlmitteln, die das Fördermittel umgebend angeordnet sind und das Kunststoffgranulat auf die Kunststoffteile schleudern, einer Auffangvorrichtung zum Auffangen des Kunststoffgranulats, einer Fördervorrichtung für das Kunststoffgranulat, mittels derer es über eine Übergabeeinrichtung an eine Trennvorrichtung überführbar ist, in der Kunststoffgranulat und Restrückstände der Kunststoffteile separierbar sind, einer nachgeordneten Windsichtvorrichtung, mittels derer anhaftende Stäube vom Kunststoffgranulat entfernbar und abtrennbar sind, sowie einer gegebenenfalls durch einen Zwischenspeicher gepufferten Fördereinrichtung, mittels derer das gereinigte Kunststoffgranulat der Strahlvorrichtung wieder zuführbar ist, wobei Mittel vorgesehen sind, mittels derer die verfahrensbedingte statische Aufladung des Kunststoffgranulates abbaubar ist, **dadurch gekennzeichnet,** daß als Mittel zur Neutralisation der statischen Aufladung des Kunststoffgranulates (12,14,15) Ionensprühstäbe und/oder Ionensprühdüsen (13) über den Kreislaufweg des Kunststoffgranulats verteilt angeordnet sind.

2. Vorrichtung nach Anspruch 1, **dadurch gekennzeichnet,** daß im Bereich der Strahlmittel (bei 5) der Strahlvorrichtung (4,5) Ionensprühstäbe (12) angeordnet sind.

3. Vorrichtung nach Anspruch 1 oder 2, **dadurch gekennzeichnet,** daß im Bereich der Auffangvorrichtung (6,8) für das Kunststoffgranulat Ionensprühdüsen (13) angeordnet sind, deren Ionensprühstrahl insbesondere auf die durchlaufenden Kunststoffteile gerichtet ist

4. Vorrichtung nach einem der Ansprüche 1 bis 3, **dadurch gekennzeichnet,** daß im Anschluß an die Fördervorrichtung (8) für das Kunststoffgranulat, insbesondere im Bereich der Übergabeeinrichtung (9), Ionensprühstäbe (14) angeordnet sind.

5. Vorrichtung nach einem der Ansprüche 1 bis 4, **dadurch gekennzeichnet,** daß im Sichtungsschleier der Windsichtvorrichtung (11) Ionensprühstäbe (15) angeordnet sind.

## Claims

1. A device for removing flashes on plastic parts by means of blasting with plastic granulate, consisting of a conveying means for conveying the plastic parts, a blasting device having blasting means which are disposed surrounding the conveying means and fling the plastic granulate to the plastic parts, a collecting device for collecting the plastic granulate, a conveying device for the plastic granulate, by means of which it can be transferred via a transferring device to a separating device, in which plastic granulate and residue of the plastic parts can be separated, a subordinate wind separating device, by means of which adhering dust can be removed and separated from the plastic granulate, and also a conveying device, which where appropriate is buffered by an intermediate storage basin, by means of which the cleaned plastic granulate can be supplied again to the blasting device, with means being provided by means of which the static charging of the plastic granulate caused by the process can be reduced,
**characterised in that** ion spray bars and/or ion spray nozzles (13) are disposed distributed over the circulation path of the plastic granulate as means for the neutralization of the static charge off the plastic granulate (12, 14, 15).

2. A device according to Claim 1,
**characterised in that** ion spray bars (12) are disposed in the region off the blasting means (at 5) of the blasting device (4, 5).

3. A device according to Claim 1 or 2,
**characterised in that** ion spray nozzles (13), the ion spray jet of which is directed especially to the passing plastic parts, are disposed in the region of the collecting device (6, 8) for the plastic granulate.

4. A device according to one of Claims 1 to 3,
**characterised in that** ion spray bars (14) are disposed following the conveying device (8) for the plastic granulate, especially in the region of the transfer device (9).

5. A device according to one of Claims 1 to 4,
**characterised in that** ion spray bars (15) are disposed in the separating haze of the wind separating device (11).

## Revendications

1. Dispositif servant à éliminer les bavures se trouvant sur les pièces en matières plastiques au moyen d'un sablage effectué à l'aide de granules de matières plastiques, dispositif comprenant un moyen d'acheminement destiné à acheminer les pièces en matières plastiques, un système de sablage avec des organes de sablage qui sont disposés autour du dispositif d'acheminement et qui projettent les granules de matières plastiques sur les pièces en matières plastiques, un dispositif de récupération pour collecter les granules de matières plastiques, un dispositif d'acheminement pour les granules de matières plastiques au moyen duquel les granules peuvent être convoyées jusqu'à un dispositif de séparation en passant par un dispositif de transfert, dispositif de séparation dans lequel les granules de matières plastiques et les particules résiduelles provenant des pièces en matières plastiques peuvent être séparées, un dispositif aéro-séparateur disposé juste après au moyen duquel les poussières adhérentes peuvent être séparées et éliminées des granules de matières plastiques, ainsi qu'un dispositif d'acheminement régulé le cas échéant par un dispositif de régulation du débit, dispositif d'acheminement au moyen duquel les granules de matières plastiques purifiées utilisées par le dispositif de sablage peuvent être recyclées, où des dispositifs ont été prévus grâce auxquels on peut annuler la charge d'électricité statique des granules de matières plastiques inhérente au procédé utilisé, caractérisé en ce que l'on a réparti des barreaux d'électrodes d'émission ionique et/ou des diffuseurs d'ions (13) le long de l'itinéraire suivi par les granules de matières plastiques de façon à servir de dispositif de neutralisation de la charge d'électricité statique des granules de matières plastiques (12, 14, 15).

2. Dispositif selon la revendication 1, caractérisé en ce que, des barreaux d'électrodes d'émission ionique (12) sont placés dans la zone de l'organe de sablage (en 5) du dispositif de sablage (4, 5).

3. Dispositif selon la revendication 1 ou 2, caractérisé en ce que, des diffuseurs d'ions (13) dont le faisceau de diffusion ionique est spécialement pointé sur les pièces de matières plastiques qui sont en train de défiler, sont disposés dans la zone du dispositif de récupération (6, 8) prévu pour les granules de matières plastiques.

4. Dispositif selon l'une des revendications 1 à 3 caractérisé en ce que des barreaux d'électrodes d'émission ionique (14) sont placés au niveau de la jonction avec le dispositif d'acheminement (8) prévu pour les granules de matières plastiques, en particulier dans la zone du dispositif de transfert (9).

5. Dispositif selon l'une des revendications 1 à 4 caractérisé en ce que des barreaux d'électrodes d'émission ionique (15) sont placés au sein de la turbulence de tri du dispositif aéro-séparateur (11).
